**Europäisches Patentamt**

**European Patent Office**

**Office européen des brevets**

(19)

(11) Veröffentlichungsnummer: **0 133 906**
**B1**

(12) **EUROPÄISCHE PATENTSCHRIFT**

(45) Veröffentlichungstag der Patentschrift:
**09.03.88**

(51) Int. Cl.⁴: **F 24 C 7/08,** H 05 B 1/02,
A 47 J 27/62

(21) Anmeldenummer: **84107546.8**

(22) Anmeldetag: **29.06.84**

(54) **Heizkörper für einen Küchenkessel.**

(30) Priorität: **30.06.83 DE 3323605**

(43) Veröffentlichungstag der Anmeldung:
**13.03.85 Patentblatt 85/11**

(45) Bekanntmachung des Hinweises auf die Patenterteilung:
**09.03.88 Patentblatt 88/10**

(84) Benannte Vertragsstaaten:
**AT BE CH DE FR GB LI NL SE**

(56) Entgegenhaltungen:
**EP - A - 0 002 563**
**EP - A - 0 063 822**
**EP - A - 0 111 269**
**DE - A - 1 960 685**
**DE - A - 3 007 932**
**DE - B - 1 765 508**

(73) Patentinhaber: **Patzner GmbH + Co., Buchener Strasse 15, D-6990 Bad Mergentheim (DE)**

(72) Erfinder: **Greiwe, Dieter, Lerchenweg 3, D-6973 Boxberg (DE)**

(74) Vertreter: **Reiniänder, Claus, Dr. et al, MEISSNER, BOLTE & PARTNER**
**Widenmayerstrasse 48 Postfach 86 06 24,**
**D-8000 München 86 (DE)**

ACTORUM AG

## Beschreibung

Die Erfindung betrifft einen Heizkörper für einen Küchenkessel, insbesondere für eine Fritüre.

Es ist bekannt, den zur Regelung der Temperatur einer Fritüre erforderlichen Thermostatfühler neben dem den Kessel beheizenden Flachrohrheizkörper derart anzuordnen, dass er parallel zu einem Teil des Flachrohrheizkörpers liegt und an diesem durch eine Schelle befestigt ist. Nachteilig ist hierbei, dass der Thermostatfühler bei der Handhabung des Heizkörpers, beispielsweise Ausschwenken aus der Fritüre, beschädigt werden kann. Auch kann der Thermostatfühler durch Panade verkrustet werden, womit die Temperaturregelung beeinträchtigt werden kann. Des weiteren ist es erforderlich, die Zuleitung zu dem Thermostatfühler abgedichtet durch die Fritürenwand zu führen. Schliesslich kann der Thermostatfühler seine Funktion nicht ausüben, wenn der Küchenkessel nur bis zu einem Niveau gefüllt ist, das unter dem Befestigungsort des Thermostatfühlers liegt.

Bekannt ist auch ein Warmhaltegerät, das einen Heizkörper und einen diesem benachbarten Thermostatfühler aufweist (EP-A 0 002 563).

Die Erfindung geht aus von einem beheizbaren Küchenkessel nach der EP-A 0 111 269 (Stand der Technik nach Artikel 54 (3) EPÜ).

Die Aufgabe der Erfindung besteht darin, einen Heizkörper für einen Küchenkessel zu schaffen, dessen Temperaturregelung verbessert ist. Gelöst wird diese Aufgabe durch die Merkmale der Ansprüche.

Die Erfindung wird beispielhaft anhand der Zeichnung erläutert, in der sind

Fig. 1 eine perspektivische schematische Ansicht einer Fritüre mit einem Flachrohrheizkörper und

Fig. 2 ein Schnitt durch einen Teil des Flachrohrheizkörpers.

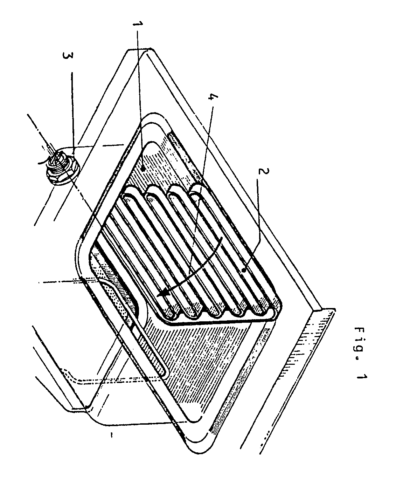

Gemäss Fig. 1 ist in der Fritürenwanne 1 ein Flachheizkörper 2 über einen Sichtflansch 3 angeordnet, und zwar schwenkbar in Richtung des Pfeils 4.

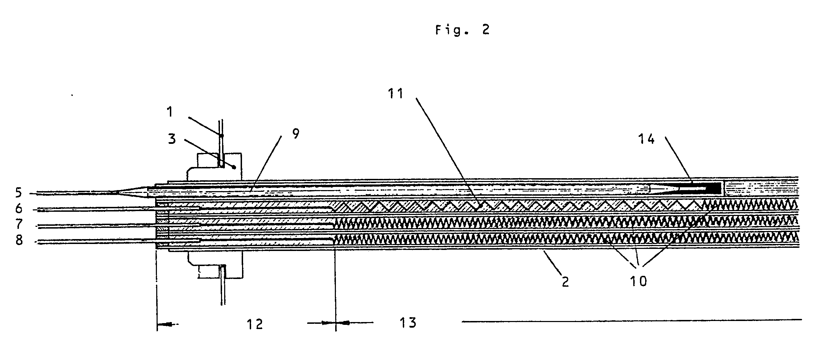

Gemäss Fig. 2 ist der Flachheizrohrkörper 2 im Querschnitt in vier Zonen 5, 6, 7 und 8 aufgeteilt. In der obersten Zone liegt in einem Aufnahmerohr 14 der Thermostatfühler 9, während in den Zonen 6, 7 und 8 die Heizwendel 10 liegt. Die Zone mit dem Thermostatfühler kann aber auch die unterste oder eine mittlere Zone sein. Ein Teil 11 der Heizwendel innerhalb der Zone 6 hat weniger Windungen als in dem anderen Teil bzw. in den anderen Zonen, d.h. ist gestreckt, wodurch der Thermostatfühler schonender und exakter beaufschlagt wird. Der Flachrohrheizkörper hat im Bereich des in der Wand der Fritürenwanne 1 befestigten Dichtflansches 3 eine unbeheizte Länge 12, an die sich eine beheizte Länge 13 anschliesst. Der Thermostatfühler steht somit auch unter dem Einfluss der Aussentemperatur, was eine optimale Temperaturregelung ergibt, wobei die Nachheizzeit des Heizkörpers verringert wird, ein Überhitzen des Heizkörpers nicht mehr möglich ist und somit das Fett in der Fritürenwanne geschont und länger benutzt werden kann.

## Patentansprüche

1. Heizkörper für einen Küchenkessel, insbesondere für eine Fritüre, in der Form eines Flachrohrheizkörpers, in dem eine Heizwendel untergebracht ist, wobei der Querschnitt des Flachrohrheizkörpers (2) in mehrere Zonen (5, 6, 7, 8) aufgeteilt ist und ein Thermostatfühler in einer der Zonen (5) untergebracht ist, dadurch gekennzeichnet, dass die Heizwendel (10) in der Zone (6), die der Zone (5) mit dem Thermostatfühler (9) benachbart ist, weniger Windungen (11) als in den anderen Zonen (6, 7, 8) hat.

2. Heizkörper für einen Küchenkessel, insbesondere für eine Fritüre, in der Form eines Flachrohrheizkörpers, in dem eine Heizwendel untergebracht ist, wobei der Querschnitt des Flachrohrheizkörpers (2) in mehrere Zonen (5, 6, 7, 8) aufgeteilt ist und ein Thermostatfühler in einer der Zonen (5) untergebracht ist und wobei der Heizkörper in seinem Befestigungsbereich ein unbeheizbares Stück aufweist, dadurch gekennzeichnet, dass ein Teil des Thermostatfühlers (9) im Bereich des unbeheizbaren Stücks (12) liegt.

## Claims

1. Heater for a kitchen kettle, especially for a deep-frying kettle, in the form of a flat tube heater, in which a heating coil is mounted, wherein the cross section of the flat tube heater (2) is divided into several zones (5, 6, 7, 8) and a thermostat sensor is arranged in one of the zones (5), characterized in that the heating coil (10) in the zone (6) which is adjacent to the zone (5) having the thermostat sensor (10), has less windings (11) than in the other zones (6, 7, 8).

2. Heater for a kitchen kettle, especially for a deep-frying kettle, in the form of a flat tube heater, in which a heating coil is mounted, wherein the cross section of the flat tube heater (2) is divided into serveral zones (5, 6, 7, 8) and a thermostat sensor is arranged in one of the zones (5), and whereby the heater has a portion not to be heated in its mounting area, characterized in that a part of the thermostat sensor (9) lies in the area of the portion not to be heated (12).

## Revendications

1. Elément chauffant pour une bassine, notamment pour une bassine à friture, en forme de tube plat dans lequel une résistance chauffante boudinée est logée, la section droite de l'élément chauffant tubulaire plat (2) étant divisée, en plusieurs zones (5, 6, 7, 8) et un palpeur de thermostat (9) étant disposé dans une de ces zones (5), caractérisé en ce que, dans la zone (6) voisine de la zone (5) dans laquelle est disposé le palpeur du thermostat (9), la résistance chauffante boudinée (10) a moins de spires (11) que dans les autres zones (6, 7, 8).

2. Elément chauffant pour une bassine, notamment pour une bassine à friture, en forme de tube plat dans lequel une résistance chauffante boudinée est logée, la section droite de l'élément chauffant tubulaire plat (2) étant divisée en plusieurs zones (5, 6, 7, 8) et un palpeur de thermostat (9) étant disposé dans une de ces zones (5), l'élément chauffant comportant une partie non chauffable (12) dans la zone de sa fixation, caractérisé en ce qu'une partie du palpeur de thermostat (9) est située dans la zone de cette partie non chauffable.

Fig. 1

Fig. 2